# EUROPÄISCHE PATENTSCHRIFT

(11) **EP 0 917 230 B1**
(45) Veröffentlichungstag und Bekanntmachung des Hinweises auf die Patenterteilung: **02.06.2004**
(21) Anmeldenummer: 98119248.7
(22) Anmeldetag: 12.10.1998
(51) Int. Cl.: H01M 10/50

(54) **Akkumulatorenbatterie mit Temperiervorrichtung**
Battery with temperature conditionning system
Accumulateur avec dispositif de gestion de la température

(30) Priorität: 12.11.1997 DE 19750069
(43) Veröffentlichungstag der Anmeldung: 19.05.1999
(73) Patentinhaber: VARTA Automotive Systems GmbH, 30419 Hannover (DE)
(72) Erfinder: Köhler, Uwe Dr., 65779 Kelkheim (DE); Jahn, Ulrich, D-91341 Röttenbach (DE)
(74) Vertreter: Lins, Edgar, Dipl.-Phys. Dr.jur.

(56) Entgegenhaltungen:
- EP-A- 0 681 156
- EP-A- 0 869 571
- WO-A-95/31012
- DE-A- 19 708 405
- PATENT ABSTRACTS OF JAPAN vol. 016, no. 488 (E-1277), 9. Oktober 1992 & JP 04 179064 A (SANYO ELECTRIC CO LTD), 25. Juni 1992

## Beschreibung

Die Erfindung betrifft eine Akkumulatorenbatterie mit in wenigstens zwei Zellenreihen angeordneten Rundzellen, deren Zellenwände mit einer Temperiervorrichtung in einem engen wärmeleitenden Kontakt stehen.

Hochbelastbare Batteriesysteme stellen eine wichtige Schlüsselkomponente für künftige Hybridfahrzeuge dar. Kennzeichen dieser Hybridfahrzeug-Batterien sind hohe Anforderungen an deren Leistung bei relativ kleinem Energieinhalt. Typische Energieinhalte liegen dabei im Bereich von 3 bis 10 kWh. Die geforderten Leistungen bei Ladung und Entladung für ein typisches Fahrzeug können dabei bis zu 100 kW betragen. Neben dem reinen elektrischen Betrieb für Kurzstrecken ist bei den Hybridfahrzeugen auch ein Mischbetrieb vorgesehen, bei dem die Batterie als Energiequelle für eine verbesserte Beschleunigung benutzt wird. Schnelles Nachladen und hohe Entladeleistungen sind insbesondere bei dieser Betriebsart erforderlich. Naturgemäß sind die hohen Lade- und Entladeleistungen mit hohen internen Verlusten verbunden, die als Wärme in der Batterie anfallen. Die in der Batterie anfallenden Wärmeverluste entstehen im Innern der Zellen in den vom Lade- und Entladestrom durchflossenen Teilen. Sie kann nur über die Oberfläche durch Strahlung, Konvektion und Wärmeleitung (z.B. über den Boden oder die Mantelfläche) abgeführt werden. Bei großen Akkumulatorenbatterien ist das Verhältnis von Oberfläche zum Volumen so ungünstig, dass die im normalen Lade- und Entladebetrieb erzeugte Wärme erst bei Betriebstemperaturen oberhalb der für die Lebensdauer der Energiespeicher zuträglichen Werte abgegeben werden kann. Die Folge ist eine Einschränkung der Nutzung durch notwendige Abkühlungspausen oder eine reduzierte Lebensdauer. In großen Akkumulatorenbatterien mit 50 bis 300 Zellen kann sich zwischen Batteriemitte und Batterierand ein Temperaturgefälle von 5 bis 10 Kelvin einstellen. Aufgrund unterschiedlicher Zellentemperaturen wird dann der Voll-Ladezustand, durch die Temperaturabhängigkeit der Ladungsaufnahme und weitere Prozesse wie Wasserstoffentwicklung oder Sauerstoffrekombination in wässrigen Batteriesystemen bedingt, zu unterschiedlichen Zeiten erreicht. Bei beschränkter Ladezeit führt dies zum Auseinanderlaufen des Ladezustandes der einzelnen Zellen und schließlich nach Überlastung der Zellen mit niedrigem Ladezustand zu deren Ausfall. In ähnlicher Weise trifft das auch für Akkumulatorenbatterien für rein elektrisch betriebene Straßenfahrzeuge zu.

Wegen der von den Automobilherstellern favorisierten Spannungslage von 300 bis 400 Volt muss eine Akkumulatorenbatterie auf Basis eines Nickel-Metallhydrid-Systems aus ca. 300 Einzelzellen bestehen. In Abhängigkeit von den geforderten Energieinhalten der Akkumulatorenbatterie werden deshalb Zellen mit Kapazitäten zwischen 7 und 25 Ah gefordert. Zellen mit einer solchen Kapazität werden vorzugsweise als Rundzellen gefertigt, weil der Herstellungsaufwand zur Fertigung solcher Zellen relativ gering ist. Eine aus Rundzellen aufgebaute Akkumulatorenbatterie wird in der DE-A 4326943 beschrieben. Die Zellen sind dabei in einem rechteckigen Kasten in der Weise angeordnet, daß die Stirnseiten der Zellen frei sind. Als Kühlung ist eine Luftströmung vorgesehen, die die durch die zwickelförmigen Hohlräume zwischen den Zellen gebildeten Kanäle nutzt. Hauptsächlich wegen der beschriebenen intemen Zellenverluste erfährt eine solche Akkumulatorenbatterie bei einem typischen Hochlastbetrieb eine schnelle Erwärmung, der mit einer gewöhnlichen Luftkühlung nur schwer zu begegnen ist. Einer der Gründe hierfür ist die mit 1,01 kJ/kg*K sehr geringe Wärmekapazität der Luft. Ein typischer Zyklenbetrieb z.B. eines aus 300 Zellen mit je 10 Ah Kapazität bestehenden Akkumulatorenbatterie sieht wie folgt aus:

| | | | | | |
|---|---|---|---|---|---|
| Ladung 1 | 100 A (5 sec) | Ladeleistung | ca. 44 kW | Ladeenergie | 61 Wh |
| Ladung 2 | 30 A (15,5 sec) | Ladeleistung | ca. 13 kW | Ladeenergie | 56 Wh |
| Entladung | 120 A (8 sec) | Entladeleistung | ca. 42 kW | Entladeenergie | 93 Wh |
| Pause | 31,5 sec. | Verlustleistung | ca. 1600 W | | |

Die Energiedifferenz von ca. 22 % zwischen Ladung und Entladung ist durch unterschiedliche Spannungslagen bedingt. Diese sind eine Folge von Ohm'schen Verlusten während des Zellenbetriebes sowie der Hysterese bei der Einzelpotentialkennlinie der positiven Nickelhydroxid-Elektrode.

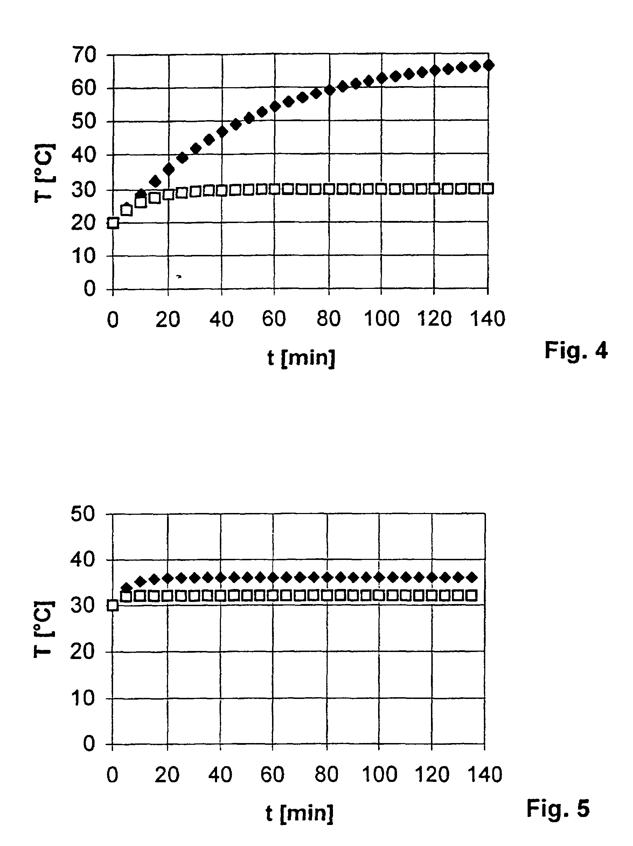

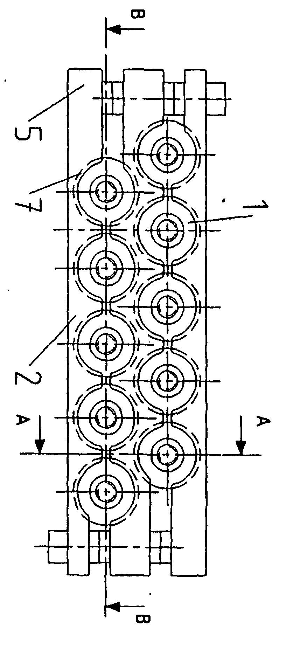

Figur 4 zeigt, daß sich eine mit Luft von 20 °C gekühlte Batterie bei einer 80minütigen Betriebsdauer auf Werte oberhalb 60 °C erwärmt, wobei in Abhängigkeit von der Zellengröße und der Anordnung der einzelnen Zelle (Nähe Lufteinlaß oder Luftauslaß) große Temperaturunterschiede zwischen den einzelnen Zellen auftreten.

Für Akkumulatorenbatterien, die aus prismatischen Zellen aufgebaut sind, ist eine Flüssigkühlung der Zellen bekannt. So werden z.B. in der Gebrauchsmusterschrift G 92 10 384 plattenförmige, flüssigkeitsdurchströmte Kühlkörper offenbart, die jeweils zwischen den großen Seitenflächen benachbarter Zellen angeordnet werden. Die aus den einzelnen Zellen und den zwischen ihnen befindlichen Kühlkörpern bestehende Akkumulatorenbatterie wird durch einen Batterietrog zusammengehalten. Solche Zellen stellen den bevorzugten Typ für Traktionsbatterien dar. Plattenförmige Kühlkörper sind für Rundzellen wegen des dabei verbleibenden Zwickelvolumens problematisch. Den Vorteilen druckstabiler und günstig zu fertigender Rundzellen stehen die Nachteile entgegen, daß das Zwickelvolumen zwischen den Rundzellen elektrochemisch nicht nutzbar ist und daß das Volumen und damit das Gewicht der eingesetzten Temperierflüssigkeit steigt, wodurch die gravimetrische Energiedichte der Akkumulatorenbatterie erniedrigt wird.

Die ältere, jedoch nicht vorveröffentlichte EP 0 869 571 A1 offenbart eine Akkumulatorenbatterie mit in zwei Zellenreihen angeordneten Rundzellen. Die Rundzellen der Zellenreihe liegen jeweils auf ihrer freien Seite an einem doppelwandig ausgebildeten Hohlkörper an, durch den ein Temperiermedium fließt. Die zueinander zeigenden Zellenwände der beiden Zellenreihen sind nicht gekühlt. Zur Positionierung dienen lediglich Zellenwandansätze, die nicht von einem Temperiermedium durchflossen sind.

Der Erfindung liegt die Aufgabe zugrunde, eine Akkumulatorenbatterie der eingangs erwähnten Art so auszubilden, dass die Vielzahl von Rundzellen unter Verzicht auf einen Batterietrog lagefixiert kompakt angeordnet und effektiv temperiert werden können.

Die Erfindung hat sich die Aufgabe gestellt, eine aus mehreren Rundzellen bestehende Akkumulatorenbatterie mit einer Temperiervorrichtung anzugeben, die es gestattet, eine Vielzahl von Rundzellen unter Verzicht auf einen Batterietrog, lagefixiert kompakt anzuordnen und effektiv zu temperieren.

Erfindungsgemäß wird die Aufgabe durch eine Akkumulatorenbatterie gelöst, wie sie in Anspruch 1 definiert ist.Weitere vorteilhafte Ausgestaltungen der Erfindungen sind in den Ansprüchen 2 bis 7 dargelegt.

Die Akkumulatorenbatterie besteht danach aus mehreren in mindestens einer Reihe angeordneten Rundzellen, die durch eine Temperiervorrichtung aus mindestens zwei von einem Kühlmedium durchströmten Hohlkörpern in ihrer räumlichen Lage zueinander fixiert werden, wobei die Hohlkörper auf ihren großen Seiten halbkreisförmige Ausbuchtungen aufweisen, deren Radien etwa denen der Zellen entsprechen. Durch die erfindungsgemäße Akkumulatorenbatterie kann auf einen zusätzlichen Batterietrog oder -behälter verzichtet werden. Das die Hohlkörper durchströmende Kühlmedium wird auf Temperaturen zwischen +10 °C und +45 °C gehalten, damit die Zellen in dem für ihren Betrieb günstigen Temperaturbereich arbeiten. Die erfindungsgemäße Akkumulatorenbatterie kann mit Hilfe der Temperiervorrichtung bei Bedarf auch erwärmt werden.

Die Erfindung wird anhand der Figuren 1 bis 5 beispielhaft erläutert.

Es zeigen:
- Figur 1 -: die Draufsicht auf eine erfindungsgemäße Akkumulatorenbatterie,
- Figur 2 -: die Schnittdarstellung entlang der Linie A - A,
- Figur 3 -: die Schnittdarstellung entlang der Linie B - B,
- Figur 4 -: den Temperaturverlauf einer luftgekühlten Hochleistungsbatterie und
- Figur 5 -: den Temperaturverlauf in einer erfindungsgemäßen Akkumulatorenbatterie.

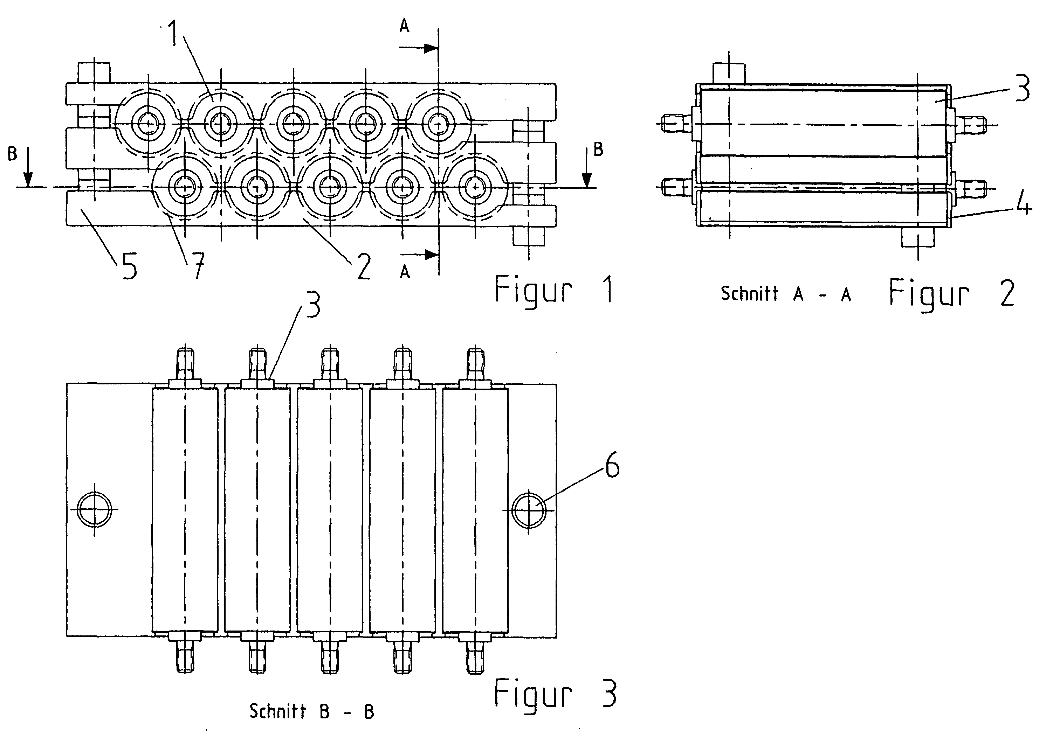

Gemäß den Figuren 1 - 3 sind die Zellen 1 der Akkumulatorenbatterie in Reihen in der Weise angeordnet, daß die Zellen 1 zu den Zellen der nächsten Reihe auf Lücke stehen. Eine Reihe von Zellen 1 wird dabei immer von zwei vom Temperiermedium durchströmten Hohlkörpern 2 fixiert. Der über die Stirnseiten 3 der Zellen 1 greifende Rand 4 der Hohlkörper 2 verhindert eine Lageveränderung der Zellen 1 in deren Längsrichtung. Die Hohlkörper 2 besitzen einen die Zellenreihen verlängerten Randbereich 5, auf dem die Zu- und Ablaufstutzen 6 so angeordnet sind, daß sie den Zu- und Ablaufstutzen 6 des die nächste Reihe umschließenden Hohlkörpers 2 gegenüber liegen. Die die letzten Reihen der Zellen 1 umschließenden Hohlkörper 2 besitzen nur auf der den Zellen 1 zugewandten großen Seite Ausbuchtungen 7. Vorteilhafterweise werden die Kontaktflächen zwischen Rundzellenoberfläche und der Oberfläche der aufnehmenden halbkreisförmigen Ausbuchtungen 7 mit einem Wärmeleitmedium versehen, das zusätzlich zur Verbesserung des Wärmeübergangs beiträgt. Die beschriebenen Hohlkörper 2 werden vorteilhafterweise als Blasformkörper aus Kunststoff hergestellt. Damit wird zum einen eine kostengünstige Herstellung erreicht, zum anderen dient der Hohlkörper 2 gleichzeitig als elektrische Isolation der Zellen 1 untereinander. Die Zellen 1 haben im allgemeinen einen Stahlmantel, der mit dem negativen Pol der Zellen in Verbindung steht. Die Hohlkörper 2 können auch aus Metall gefertigt sein, wenn für eine elektrische Isolation zwischen der Zellenoberfläche und dem Hohlkörper 2 gesorgt ist. Im Falle eines metallischen Zellengehäuses kann dies durch das Aufbringen einer dünnen elektrisch isolierenden Lackschicht erreicht werden, wobei diese den Wärmetransfer kaum beeinträchtigt. Wegen des geringen Gewichts werden die metallischen Hohlkörper 2 dann vorzugsweise aus Aluminium hergestellt. Der für elektrische Isolationszwecke wichtige Oberflächenfilm wird dann vorteilhafterweise durch Eloxieren hergestellt. Selbst bei relativ geringen Schichtdicken wird dadurch eine gute Isolationswirkung erzielt, die die Wärmeleitfähigkeit kaum beeinflußt. Alternativ dazu können die Zellen 1 auch mit einem Kunststoffgehäuse versehen werden, so daß auf eine elektrische Isolationsschicht auf den metallischen Hohlkörpern 2 verzichtet werden kann.

Figur 4 zeigt den Temperaturverlauf in einer luftgekühlten Akkumulatorenbatterie, die gemäß dem oben beschriebenen Lade- und Entlademodus betrieben wird. Die Kühlung wird mit 150 m³/h Luft von 20°C vorgenommen, wobei die Temperatur der wärmsten Zelle (◆) gegenüber der kühlsten Zelle (□) innerhalb von 120 Minuten um ca. 40 °C steigt und Absolutwerte von ca. 70 °C erreicht.

Figur 5 zeigt den Temperaturverlauf in einer erfindungsgemäßen Akkumulatorenbatterie, die gemäß dem oben beschriebenen Lade- und Entlademodus betrieben wird. Die umlaufende Temperierflüssigkeit wird dabei durch einen externen Wärmetauscher auf einem Temperaturniveau von ca. 30 °C gehalten. Bei einer Umlaufrate von 100 l Wasser/h steigt das durchschnittliche Temperatumiveau der Batterie nur auf ca. 36 °C, wobei die maximalen Temperaturdifferenzen in der Batterie zwischen den wärmsten Zellen (◆)und den kühlsten Zelle (□) einen Wert von 5 K im wesentlichen nicht übersteigen. Für die Temperierung der Zellen der Akkumulatorenbatterie wird vorzugsweise ein Glykol/Wasser-Gemisch eingesetzt.

## Patentansprüche

1. Akkumulatorenbatterie mit in wenigstens zwei Zellenreihen angeordneten Rundzellen, deren Zellenwände mit einer Temperiervorrichtung in einem engen wärmeleitenden Kontakt stehen, **dadurch gekennzeichnet, dass** jede Zellenreihe von zwei von einem Temperiermedium durchströmten Hohlkörpern (2) eingeschlossen ist, die halbkreisförmige Ausbuchtungen (7) aufweisen, deren Radien etwa denen der Zellen (1) entsprechen und die so angeordnet sind, dass sie die Zellen (1) in ihrer räumlichen Lage zueinander fixieren.

2. Akkumulatorenbatterie nach Anspruch 1, **dadurch gekennzeichnet, dass** die jeweils letzte Zellenreihe durch einen Hohlkörper (2) abgeschlossen ist, der nur auf der den Zellen (1) zugewandten Seite Ausbuchtungen (7) aufweist.

3. Akkumulatorenbatterie nach Anspruch 1 und/oder 2, **dadurch gekennzeichnet, dass** die Zellenreihen auf Lücke zueinander angeordnet sein.

4. Akkumulatorenbatterie nach einem der Ansprüche 1 bis 3, **dadurch gekennzeichnet, dass** die Hohlkörper (2) einen über die Zellenreiehn hinausreichenden Randbereich (5) besitzen, in dem sich die Zu- und Ablaufstutzen (6) für das Temperiermedium befinden.

5. Akkumulatorenbatterie nach Anspruch 4, **dadurch gekennzeichnet, dass** die Zu- und Ablaufstutzen (6) der einzelnen Hohlkörper (2) sich gegenüberliegen.

6. Akkumulatorenbatterie nach einem oder mehreren der Ansprüche 1 bis 5, **dadurch gekennzeichnet, dass** die Hohlkörper (2) einen die Stirnseiten (3) der Zellen (1) überlappenden Rand (4) besitzen.

7. Akkumulatorenbatterie nach einem oder mehren der Ansprüche 1 bis 6, **dadurch gekennzeichnet, dass** die Hohlkörper (2) im Blasformverfahren aus Kunststoff hergestellt sind.

8. Akkumulatorenbatterie nach einem oder mehreren der Ansprüche 1 bis 7, **dadurch gekennzeichnet, dass** als Temperiermedium ein Wasser/Glykol-Gemisch verwendet wird.

## Claims

1. Rechargeable battery with round cells which are arranged in at least two cell rows, whose cell walls make close thermally conductive contact with a heat conditioning apparatus, **characterized in that** each cell row is enclosed by two hollow bodies (2) through which a heat conditioning medium flows and which have semi-circular depressions (7) whose radii correspond approximately to those of the cells (1) and which are arranged such that they fix the cells (1) in their spatial position with respect to one another.

2. Rechargeable battery according to Claim 1, **characterized in that** the last cell row is in each case closed by a hollow body (2) which has depressions (7) only on the side facing the cells (1).

3. Rechargeable battery according to Claim 1 and/or 2, **characterized in that** the cell rows are arranged with a gap between them.

4. Rechargeable battery according to one of Claims 1 to 3, **characterized in that** the hollow bodies (2) have an edge area (5) which extends beyond the cell rows and in which the inlet and outlet connecting stubs (6) for the heat conditioning medium are located.

5. Rechargeable battery according to Claim 4, **characterized in that** the inlet and outlet connecting stubs (6) of the individual hollow bodies (2) are opposite one another.

6. Rechargeable battery according to one or more of Claims 1 to 5, **characterized in that** the hollow bodies (2) have an edge (4) which overlaps the end faces (3) of the cells (1).

7. Rechargeable battery according to one or more of Claims 1 to 6, **characterized in that** the hollow bodies (2) are produced from plastic using the blow-moulding process.

8. Rechargeable battery according to one or more of Claims 1 to 7, **characterized in that** a water/glycol mixture is used as the heat conditioning medium.

## Revendications

1. Accumulateur comportant des piles rondes installées en au moins deux rangées et dont les parois sont en contact de conduction thermique étroit avec un dispositif de gestion de température,
**caractérisé en ce que**
chaque rangée de piles est entourée par deux corps creux (2) traversés par un fluide de mise en température,
ces corps creux étant munis de cavités semi-circulaires (7) dont le rayon correspond sensiblement à celui des piles (1) sont installés pour bloquer la position relative des piles (1) dans l'espace.

2. Accumulateur selon la revendication 1,
**caractérisé en ce que**
chaque fois, la dernière rangée de piles est fermée par un corps creux (2) qui ne comporte des cavités (7) que sur son côté tourné vers les piles (1).

3. Accumulateur selon la revendication 1 et/ou 2,
**caractérisé en ce que**
les rangées de piles sont installées en quinconce l'une par rapport à l'autre.

4. Accumulateur selon l'une quelconque des revendications 1 à 3,
**caractérisé en ce que**
les corps creux (2) possèdent une zone marginale (5) débordant des rangées de piles et dans laquelle se trouvent les ajutages d'alimentation et d'évacuation (6) du fluide de gestion de température.

5. Accumulateur selon la revendications 4,
**caractérisé en ce que**
les ajutages d'alimentation et d'évacuation (6) des différents corps creux (2) sont opposés les uns aux autres.

6. Accumulateur selon l'une ou plusieurs des revendications 1 à 5.
**caractérisé en ce que**
les corps creux (2) ont un bord (4) qui chevauche la face frontale (3) des piles (2).

7. Accumulateur selon l'une ou plusieurs des revendications 1 à 6,
**caractérisé en ce que**
les corps creux (2) sont fabriqués en matière synthétique par un procédé de moulage soufflage.

8. Accumulateur selon l'une des revendications 1 à 7,
**caractérisé en ce que**
le milieu de gestion de température est un mélange eau/glycol.
